# EUROPÄISCHE PATENTSCHRIFT

(11) **EP 2 023 018 B1**
(45) Veröffentlichungstag und Bekanntmachung des Hinweises auf die Patenterteilung: **13.10.2010**
(21) Anmeldenummer: 07015534.6
(22) Anmeldetag: 07.08.2007
(51) Int. Cl.: F16H 61/32

(54) **Schaltkraft-Unterstützungsvorrichtung**
Gearshift force support device
Servo pour changement de vitesse

(43) Veröffentlichungstag der Anmeldung: 11.02.2009
(73) Patentinhaber: Hoerbiger Antriebstechnik GmbH, 86956 Schongau (DE)
(72) Erfinder: Echtler, Peter, 86956 Schongau (DE); Kwittner, Goetz, 18528 Bergen auf Rügen (DE); Fürguth, Werner, 87640 Biessenhofen/Altdorf (DE)
(74) Vertreter: Kitzhofer, Thomas

(56) Entgegenhaltungen:
- EP-A- 1 167 836
- DE-B3-102004 054 258
- GB-A- 2 127 180

## Beschreibung

Die Erfindung betrifft eine Schaltkraft-Unterstützungsvorrichtung einer Schaltung eines Schaltgetriebes gemäß Anspruch 1. Eine derartige Vorrichtung ist aus der GB-A-2 127 180 bekannt.

Aus der EP 06004984.8, die einen nicht-vorveröffentlichten Stand der Technik darstellt, ist ein Stabaktuator bekannt, der als eine derartige Schaltkraft-Unterstützungsvorrichtung dienen kann. Der Stabaktuator weist einen an beiden Enden aus dem Gehäuse herausragenden Stab auf, der an einem seiner Enden die von der Schaltung aufgebrachte Kraft aufnimmt und an seinem anderen Ende eine Betätigungskraft für das Schaltgetriebe abgibt, die die Summe der durch die Schaltung aufgebrachten Kraft und einer durch einen Antrieb des Stabaktuators erzeugten Unterstützungskraft darstellt.

Aufgrund dieser Ausbildung des Stabaktuators ist dieser immer direkt im Schaltgestänge bzw. im Schaltzug der Schaltung anzuordnen, was jedoch aus Platzgründen oft nur schwer oder gar nicht möglich ist. Insbesondere bei einer Nachrüstung, bei der man sich an die gegebenen Platzverhältnisse halten muss, ist dieses Problem noch größer, als wenn der Stabaktuator werkseitig von Anfang an eingebaut ist. Zudem stellt der häufig nur geringe verfügbare Einbauraum, insbesondere am oder in der Nähe des Fahrzeuggetriebes, an den Aktuator erschwerte Einsatzbedingungen, wie z.B. erhöhte Temperaturbelastungen, Verschmutzungen oder Feuchtigkeitseinflüsse dar.

Es ist daher Aufgabe der vorliegenden Erfindung, eine Schaltkraft-Unterstützungsvorrichtung zu schaffen, die es möglich macht, den Stabaktuator ortsunabhängig anordnen zu können und insbesondere verbesserte Einsatzbedingungen für den Stabaktuator ermöglicht.

Die Lösung dieser Aufgabe erfolgt durch die Merkmale des Anspruchs 1.

Dadurch, dass der Stabaktuator über eine Verbindungseinrichtung, die als Schaltzug ausgebildet ist, mit dem Schalthebel verbindbar ist, ist es möglich, den Aktuator praktisch an jedem zur Verfügung stehenden Ort, beispielsweise in einem Motorraum, anzuordnen und die örtliche Trennung zwischen dem Stabaktuator und der Schaltung durch die erfindungsgemäß vorgesehene Verbindungseinrichtung zu überbrücken.

Die Unteransprüche haben vorteilhafte Weiterbildungen der Erfindung zum Inhalt.

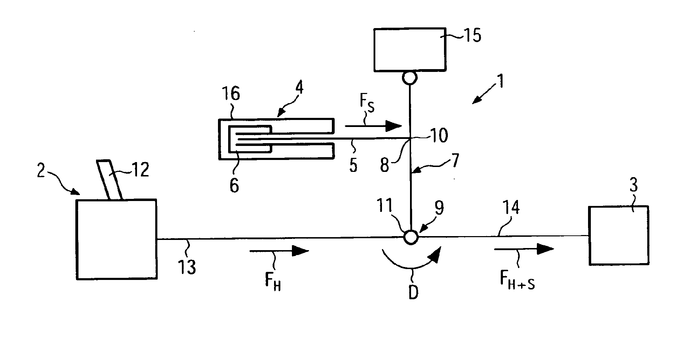

Weitere Einzelheiten, Vorteile und Merkmale der vorliegenden Erfindung ergeben sich aus nachfolgender Beschreibung eines Ausführungsbeispiels anhand der Zeichnung.

Die einzige Figur der Zeichnung zeigt eine schematisch stark vereinfachte Darstellung einer erfindungsgemäßen Schaltkraft-Unterstützungsvorrichtung (Servovorrichtung) 1 einer Schaltung 2 eines Schaltgetriebes 3.

Die Unterstützungsvorrichtung 1 weist einen Stabaktuator 4 auf, der einen Stab 5 umfasst, der in einem Gehäuse 16 des Stabaktuators 4 längsbeweglich gelagert ist. Der Stab 5 wird von einem Antrieb 6 mit einer Unterstützungskraft F_{S} beaufschlagt, wie dies durch den Pfeil F_{S} in der Figur symbolisiert ist. Der Antrieb 6 kann hierbei beispielsweise als elektromagnetischer Linearmotor oder Reluktanzmotor ausgeführt sein.

Wie die schematische Darstellung der Figur verdeutlicht, ragt der Stab 5 nur an einem Ende des Gehäuses 16 aus diesem heraus und weist dementsprechend an dieser Seite ein freies Ende 8 auf, dass an einem Koppelbereich 10 mit einer Verbindungseinrichtung 7 mit dieser verbunden ist. Die Verbindungseinrichtung 7 ist hier als zusätzlicher Schaltzug ausgebildet.

Über einen Verbindungsbereich 11, der im Beispielsfalle das freie Ende der Verbindungseinrichtung 7 ist, ist die Verbindungseinrichtung 7 mit dem Schalthebel 12 der Schaltung 2 bzw. einem Schaltzug 9 der Schaltung 2 verbunden, die im Beispielsfalle einen inneren Schaltzug 13 und einen äußeren Schaltzug 14 umfasst. Dieser führt zum Getriebe 3, so dass es durch diese Anordnung möglich ist, eine um die Unterstützungskraft F_{S} verstärkte Handkraft F_{H+S} aufzubringen, wobei die dieser Kraft zugrundeliegende Schaltkraft F_{H} über den Schalthebel 12 aufgebracht wird.

Diese Anordnung ermöglicht es, den Stabaktuator 4 praktisch an jeder Stelle eines Einbauraumes unterzubringen, an der Platz für die Anordnung des Stabaktuators 4 ist.

Neben der voranstehenden schriftlichen Offenbarung der Erfindung wird hiermit explizit auf deren zeichnerische Darstellung Bezug genommen.

### Bezugszeichenliste

- 1: Schaltkraft-Unterstützungsvorrichtung (Servoeinrichtung)
- 2: Schaltung
- 3: Schaltgetriebe
- 4: Stabaktuator
- 5: Stab
- 6: Antrieb
- 7: Verbindungseinrichtung
- 8: Ende des Stabes 5
- 9: Schaltzug
- 10: Koppelbereich
- 11: Verbindungsbereich
- 12: Schalthebel
- 13: Innerer Schaltzug
- 14: Äußerer Schaltzug
- 15: Schaltdom
- 16: Gehäuse
- F_{S}: Unterstützungskraft
- F_{H}: Handkraft
- F_{H+F}: Verstärkte Schaltkraft
- D: Drehrichtung der Verbindungseinrichtung 7

## Patentansprüche

1. Schaltkraft-Unterstützungsvorrichtung (1) einer Schaltung (2) eines Schaltgetriebes (3)
- mit einem Stabaktuator (4), der einen Stab (5) zur Übertragung einer von einem Antrieb (6) des Stabaktuators (4) erzeugten Unterstützungskraft (F_{S}). aufweist, und
- mit einer Verbindungseinrichtung (7), die einerseits mit einem freien aus dem Stabaktuator (4) herausgeführten Ende (8) des Stabes (5) und andererseits mit dem Schalthebel (12) der Schaltung (2) verbunden ist, **dadurch gekennzeichnet dass** die Verbindungseinrichtung (7) als Schaltzug ausgebildet ist.

2. Unterstützungsvorrichtung nach Anspruch 1, **dadurch gekennzeichnet, dass** der Stabaktuator (4) in Parallelschaltung zu einem Schaltzug (9) zwischen Schaltung (2) und Getriebe (3) angeordnet ist.

## Claims

1. A gearshift power assistance device (1) of a gearshift system (2) of a manual transmission (3), comprising
- a rod actuator (4) which includes a rod (5) for transmitting an assistance force (F_{S}) generated by a drive (6) of the rod actuator (4), and
- a connecting means (7) which is connected, on the one hand, with a free end (8) of the rod (5), led out of the rod actuator (4) and, on the other hand, with the gearshift lever (12) of the gearshift system (2), **characterized in that**
the connecting means (7) is formed as a gearshift cable.

2. The assistance device according to claim 1, **characterized in that** the rod actuator (4) is arranged in parallel connection with a gearshift cable (9) between the gearshift system (2) and the transmission (3).

## Revendications

1. Dispositif d'assistance (1) de force de changement de vitesse d'un système (2) de changement de vitesse d'une boîte de vitesses (3), comportant
- un actionneur tige (4) qui présente une tige (5) pour la transmission d'une force d'assistance (Fₛ) générée par un entraînement (6) de l'actionneur tige (4), et
- un dispositif de raccordement (7) relié, d'une part, à une extrémité (8) libre de la tige (5), dirigée hors de l'actionneur tige (4), et, d'autre part, au levier (12) de changement de vitesse du système (2) de changement de vitesse, **caractérisé en ce que**
le dispositif de raccordement (7) est réalisé sous forme de câble de changement de vitesse.

2. Dispositif d'assistance selon la revendication 1, **caractérisé en ce que** l'actionneur tige (4) est agencé entre le système (2) de changement de vitesse et la boîte de vitesses (3) de manière à être connecté en parallèle à un câble (9) de changement de vitesse.
